## Europäisches Patentamt

## European Patent Office

## Office européen des brevets

(19)

(11) Veröffentlichungsnummer: **0 123 091**
**B1**

(12) **EUROPÄISCHE PATENTSCHRIFT**

(45) Veröffentlichungstag der Patentschrift:
**20.05.87**

(51) Int. Cl.⁴: **F 24 J 2/42**

(21) Anmeldenummer: **84102626.3**

(22) Anmeldetag: **10.03.84**

(54) **Wand zur Absorption der Sonnenstrahlen.**

(30) Priorität: **14.03.83 DE 3309033**

(43) Veröffentlichungstag der Anmeldung:
**31.10.84 Patentblatt 84/44**

(45) Bekanntmachung des Hinweises auf die Patenterteilung:
**20.05.87 Patentblatt 87/21**

(84) Benannte Vertragsstaaten:
**AT BE CH DE FR GB IT LI LU NL SE**

(56) Entgegenhaltungen:
**WO-A-82/03100**
**DE-A-3 043 819**
**DE-A-3 100 521**
**DE-A-3 216 165**
**FR-A-2 444 131**
**FR-A-2 456 291**
**FR-A-2 486 983**
**FR-A-2 500 036**
**GB-A-2 054 004**
**US-A-4 119 083**
**US-A-4 257 396**

(73) Patentinhaber: **Volksbank Remscheid eG, Tenter Weg 1-3, D-5630 Remscheid- Lennep (DE)**
Patentinhaber: **Kernforschungsanlage Jülich Gesellschaft mit beschränkter Haftung, Leo-Brand- Strasse, D-5170 Jülich (DE)**

(72) Erfinder: **Melchior, Bernd, Burger Strasse 255, D-5630 Remscheid (DE)**
Erfinder: **Grimme, Friedrich Wilhelm, Dr., Fischweiher 5, D-5100 Aachen (DE)**
Erfinder: **Heidrich, Wolfgang, Dr., Girbelsrather Strasse 16, D-5164 Nörvenich (DE)**

(74) Vertreter: **Patentanwaltsbüro Cohausz & Florack, Schumannstrasse 97, D-4000 Düsseldorf 1 (DE)**

LIBER, STOCKHOLM 1987

**Beschreibung**

Die Erfindung betrifft eine Wand mit einer auf der Außenseite davor etwa parallel befestigten, Sonnenstrahlen durchlässigen ersten Schicht, hinter der eine die Sonnenstrahlung absorbierende Fläche im Abstand angeordnet ist, wobei im Raum zwischen Schicht und Flächen lichtdurchlässiges, wärmedämmendes Material angeordnet ist.

Es ist bekannt, vor einer Außenwand eines Gebäudes in einem Abstand eine parallele Glasscheibe zu befestigen, um die Sonnenstrahlung, die durch die Glasscheibe hindurchtritt und auf die Außenseite der Wand trifft, dort in Wärme umzuwandeln (Trombe-Wand). Die erzeugte Wärme wird durch Luft abtransportiert, die zwischen der Glasscheibe und der Wand strömt. Die in der Wand gespeicherte Wärme tritt als Wärmestrahlung zu einem großen Teil wieder durch die Glasscheibe nach außen, so daß erhebliche Wärmeverluste bestehen.

Aus der WO-A-82 03 104 ist es bekannt, bei einer Sonnenstrahlen absorbierenden Wand in den Raum zwischen der lichtdurchlässigen Außenplatte und der absorbierenden Fläche Glaswolle anzuordnen. Da Glaswolle einen Großteil der Sonnenstrahlung absorbiert, wird Wärme an einer unerwünschten Stelle, d.h. in einem Abstand zur absorbierenden Fläche gespeichert, so daß Energieverluste auftreten.

Aufgabe der Erfindung ist es, eine Wand der eingangs genannten Art derart zu verbessern, daß sie bei einfachster Konstruktion und hoher Wärmedämmung eine hohe Energieausbeute erzielt.

Diese Aufgabe wird erfindungsgemäß dadurch gelöst, daß das lichtdurchlässige, wärmedämmende Material aus Acrylglas oder Silgel in Schaum-, Kapillarröhrchenform oder in amorpher Form besteht.

Eine solche Konstruktion erzielt geringe Wärmeverluste und eine hohe Energieausbeute. Die Konstruktion ist einfach, stabil und preiswert und leicht montierbar. Der technische Aufwand ist gering, und nur in Sonderfällen sind Pumpen und/oder Lüfter zum Abtransport der Wärme erforderlich. Verschmutzung tritt kaum auf, und eine solche Wand läßt sich architektonisch ansprechend gestalten, so daß sie von außen kaum von üblichen Gebäudewänden zu unterscheiden ist.

Die Materialschicht läßt die Sonnenstrahlung bis zur Absorptionsfläche hindurchtreten, verhindert aber in umgekehrter Richtung ein Austreten von Wärmestrahlung und jegliche Wärmeenergieübertragung. Die Materialschicht bildet damit bei hoher Lichtdurchlässigkeit eine optimale Dämmschicht, die auch dann noch wirksam ist, wenn es z.B. nachts darum geht, ein Gebäude zu dämmen.

Besonders vorteilhaft ist es, wenn die Schicht auf der Außenseite durch eine Außenschicht, insbesondere Folie oder Scheibe lichtdurchlässigen Materials, wie Silikat- oder Acrylglas, insbesondere Preßglas, abgedeckt ist. Hierdurch wird die Materialschicht geschützt, eine leichte Reinigung ermöglicht, und das Aussehen der Wand kann durch die Gestaltung dieser Außenschicht beliebig gewählt werden.

Vorzugsweise wird vorgeschlagen, daß die Absorptionsfläche auf der Außenseite der Wand und/oder der Innenseite der Materialschicht befestigt ist. Die in der Absorptionsfläche entstehende Wärme kann direkt in die Wand übergeführt werden. Vorzugsweise wird vorgeschlagen, daß zwischen Materialschicht und Wand, insbesondere zwischen Materialschicht und Absorptionsfläche und/oder zwischen Absorptionsfläche und Wand ein Zwischenraum besteht, der von einem Fluid, insbesondere Luft, durchströmt ist. Hierdurch kann zumindest ein Teil der entstehenden Wärme abgeführt und dorthin gebracht werden, wo sie benötigt wird. Dies kann durch freie Konvektion oder aber auch durch Pumpen bzw. Lüfter erzielt werden. Der Zwischenraum hat darüber hinaus dämmende Wirkung, wenn Konvektion verhindert wird.

Vorzugsweise wird vorgeschlagen, daß die Absorptionsfläche bzw. -schicht mindestens auf einer Seite Vorsprünge, insbesondere Rippen aufweist, die in den Zwischenraum und/ oder die Materialschicht hineinragen. Diese Vorsprünge dienen der Verbesserung der Wärmeabgabe an das Fluid und/oder dem Einfangen von Sonnenstrahlung. Ein besonders effektives Abführen der Wärmeenergie durch das Fluid wird dadurch erreicht, daß die Absorptionsfläche (bzw. -schicht) innen Kanäle für das Fluid aufweist.

Ferner wird vorgeschlagen, daß die Außenschicht von einer lichtdurchlässigen Scheibe gebildet ist, die auf der Außenseite durch Fugen, Nuten, Streifen, stellenweisen und/oder streifenförmigen Material- und/oder Farbauftrag architektonisch gestaltet ist. Auch kann die Außenschicht platten-, ziegel- und/oder riemenförmige Scheiben lichtdurchlässigen Materials aufweisen. Dabei können die Scheiben durch Fugen voneinander getrennt sein, die durch ein abweichendes Material gefüllt sind.

Ein sicherer Halt der Außenschicht, insbesondere bei einer Materialschicht geringerer Festigkeit, wird dadurch erreicht, daß die Außenschicht auf der Innenseite Vorsprünge, insbesondere Zapfen trägt, die die Materialschicht durchdringen und sich auf der Absorptionsfläche bzw. -schicht und/oder der Wandaußenseite abstützen. Dabei kann jede platten- oder riemenförmige Scheibe der Außenschicht mindestens zwei Vorsprünge, insbesondere Zapfen tragen.

Ein Abtransport der Wärme kann alternativ oder zusätzlich auch innerhalb der Materialschicht geschehen. Hierzu wird vorgeschlagen, daß die Materialschicht mindestens einen Zwischenraum, insbesondere Kanäle und/oder miteinander verbundene Zwischenräume, wie Großporen, aufweist. Dabei kann der Zwischenraum oder die Zwischenräume vom Fluid, insbesondere Luft, durchströmt sein.

Auch kann die Materialschicht aus amorphem Siliziumoxid bestehen. Hierdurch ist die Schicht optisch transparent, so daß nicht nur achitektonisch interessante Wände, sondern auch transparente Glaswände und Fenster geschaffen werden können, die durchsichtig sind und dabei als Sonnenkollektoren Wärme erzeugen.

Vorzugsweise wird vorgeschlagen daß sie einen vor der Befestigung transportierbaren Sonnenkollektor bildet. Auch kann die Wand durch beschattende Vorrichtungen, insbesondere Jalousien und/oder durch eine reflektierende Bedampfung auf der Wandaußenseite ein Eindringen der Sonnenstrahlung begrenzbar sein. Ferner wird vorgeschlagen, daß die die Sonnenstrahlung absorbierende Schicht oder Fläche eine selektive Schicht ist oder trägt.

Ausführungsbeispiele der Erfindung sind in den Zeichnungen schematisch dargestellt und werden im folgenden näher beschrieben. Es zeigen:

Fig. 1 einen waagerechten Schnitt durch ein erstes Ausführungsbeispiel im Ausschnitt;

Fig. 2 eine Außenansicht der Wand nach Fig. 1;

Fig. 3 einen waagerechten Schnitt durch ein zweites Ausführungsbeispiel;

Fig. 4 einen Schnitt und eine Hinteransicht einer Platte, aus der die Außenschicht nach den Figuren 1 bis 5 zusammengesetzt ist;

Fig. 5 einen waagerechten Schnitt durch ein drittes Ausführungsbeispiel;

Fig. 6 einen waagerechten Schnitt durch die absorbierende Schicht nach Fig. 5 in alternativer Ausführung; und

Fig. 7 einen waagerechten Schnitt durch ein viertes Ausführungsbeispiel.

Auf der Außenseite einer insbesondere tragenden Wand 1 ist eine geschwärzte, Sonnenstrahlen absorbierende Schicht oder Fläche 2 aufgebracht. Die Fläche oder Schicht 2 kann eine selektive Schicht sein, insbesondere eine selektive Beschichtung tragen, so daß sie den wesentlichen Teil des Sonnenspektrums absorbiert und über ca. $2\mu$ kaum Strahlung abgibt. Die Fläche oder Schicht 2 ist nach außen hin durch eine lichtdurchlässige Schicht 3, insbesondere aus Acrylglasschaum oder amorphem Siliziumoxid, Silgel (Aerogel) oder Kapillarröhrchen aus Glas oder Kunststoff abgedeckt, so daß die außen auftreffende Sonnenstrahlung durch die Schicht 3 hindurchtreten und auf die Fläche 2 auftreffen kann. Die Schicht 3 ist auf der Außenseite durch eine Außenschicht 4 abgedeckt, die lichtdurchlässig, insbesondere optisch transparent ist und eine Folie aus Kunststoff oder eine Scheibe aus Silikat- oder Acrylglas, insbesondere Preßglas sein kann. Die Schicht 4 ist geringerer Dicke als die Schicht 3, wobei die Dicke der Schicht 4 von dem Maß abhängt, wie sehr ein Schutz gegen mechanische Einwirkungen bestehen soll und die Dicke der Schicht 3 von der gewünschten Dämmwirkung abhängt.

Die Außenschicht 4 kann von einer lichtdurchlässigen Scheibe gebildet sein, die durch Fugen, Nuten, Streifen insbesondere farblich gestaltet ist und damit wie Mauerwerk aussehen kann. Dabei kann die Außenschicht auch aus platten-, ziegel- und/oder riemenförmigen Scheiben aufgebaut werden, die durch Fugen voneinander getrennt sind, die von Fugenmaterial 5 ausgefüllt sind. Aus mechanischen Gründen stützt sich im Ausführungsbeispiel nach Fig. die Außenschicht durch innen vorspringende Zapfen 6 an der Wand 1 bzw. der absorbierenden Fläche 2 ab. Dabei weist jeder Ziegel bzw. Riemen der Außenschicht 4 zwei bis vier waagerechte, rechtwinklig abstehende Vorsprünge, insbesondere Zapfen 6 auf.

Die absorbierende Fläche 2 kann Farbauftrag auf einer tragenden Wand 1 aus Mauerwerk oder Beton sein, wobei die Wand als Wärmespeicher arbeitet und die Wärme verzögernd an den Innenraum des Gebäudes abgibt. Bei gleicher Arbeitsweise kann die absorbierende Fläche 2 aber auch von einem wärmeleitenden Material, insbesondere einem Blech gebildet sein, das an der Innenseite der Schicht 3 und/oder an der Außenseite der Wand 1 befestigt ist.

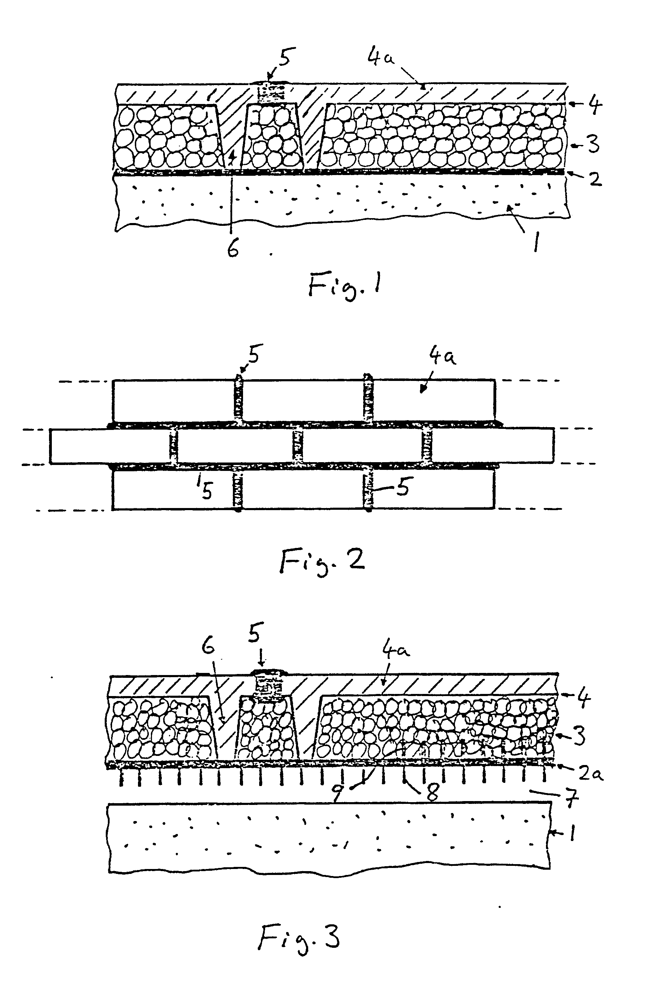

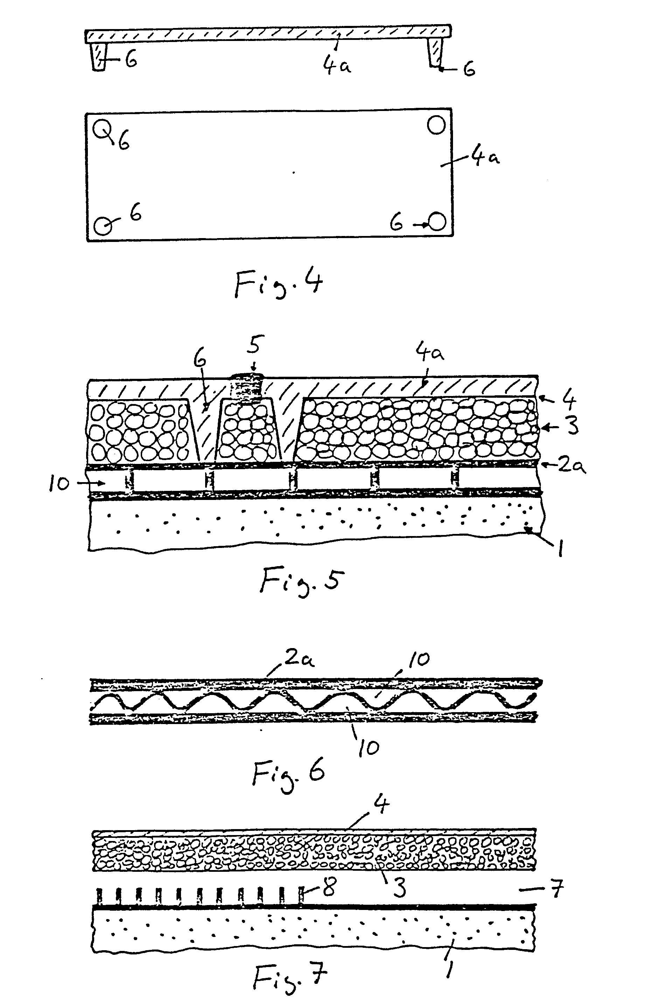

Das Ausführungsbeispiel nach Fig. 3 unterscheidet sich von dem nach Fig. 1 und 2 im wesentlichen nur dadurch, daß zwischen der Schicht 3 und der Wand 1 ein Luftraum, insbesondere ein paralleler Luftspalt 7 vorgesehen ist, durch den die Wärme abgeführt werden kann. Die absorbierende Fläche ist von einer metallenen Absorptionsschicht 2a insbesondere aus Blech gebildet, die in den Luftraum 7 hineinragende Rippen 8 trägt, um den Wärmeübergang zur Luft zu erleichtern. Wie im rechten Bereich der Fig. 3 dargestellt, kann die Absorptionsschicht 2a auch auf der gegenüberliegenden Seite Rippen 9 tragen, die in die Schicht 3 hineinreichen, um Strahlungsfallen zu bilden und/oder durch die Hohlräume der Schicht 3 strömender Luft eine größere Oberfläche zu bieten. In dem letzteren Fall kann der Luftraum 7 wegfallen.

Im Ausführungsbeispiel nach Fig. 5 sind zum Abtransport der Wärme Luftkanäle 10 in dem die absorbierende Fläche bildenden Element 11 vorgesehen. Dieses Element 11 ist zur besseren Wärmeleitfähigkeit aus Metall, insbesondere Blech gefertigt, wobei die Innenwände, wie in Fig. 6 dargestellt, von einem Wellblech gebildet sein können. Je nach Erfordernis kann diese Schicht eng an der Wand anliegen, um Wärme zur Wand zu übertragen und damit die Wand als Speicher zu benutzen oder aber nur punktförmig mit der Wand verbunden sein, um eine Überhitzung zu verhindern.

In Fig. 7 ist der Luftzwischenraum zwischen der Wand 1 oder der auf der Wand befestigten absorbierenden Fläche 2 und der Schicht 3 angeordnet, so daß die Sonnenstrahlung den Luftraum bzw. Luftspalt durchdringt, ehe sie auf die auf der Außenseite der Wand 1 befestigte absorbierende Fläche 2 trifft. Diese Fläche, insbesondere aus Metall, kann, wie in Fig. 7 links dargestellt, wiederum in den Luftzwischenraum 7 hineinragende Rippen 8 tragen.

Sind mechanische Beschädigungen der Schicht 3 nicht zu befürchten, so kann die Außenschicht 4 verhältnismäßig dünn ausgeführt sein und, wie in Fig. 7 dargestellt, auf der Innenseite keine Abstützungen tragen. Bei ausreichender Festigkeit der Schicht 3 kann die Schicht 4 von einer Kunststoffolie oder einem aufgetragenen Lack gebildet sein. In südlichen Breiten als auch für heiße Sonnentage kann die Außenschicht 4, 4a außen durch eine Infrarotstrahlung reflektierende Schicht bedampft sein. Auch kann außen eine beschattende Vorrichtung, insbesondere eine Jalousie, befestigt sein.

Die Wand kann eine geneigte oder waagerechte Fläche eines Gebäudes, insbesondere eine Dachfläche bilden. Ferner kann sie einen freistehenden oder mit einem Gebäude verbundenen Sonnenkollektor bilden oder ein Teil davon sein.

## Patentansprüche

1. Wand mit einer auf der Außenseite davor etwa parallel befestigten, Sonnenstrahlen durchlässigen Aussenschicht (4), hinter der eine die Sonnenstrahlung Absorbierende Fläche (2, 2a) im Abstand angeordnet ist, wobei im Raum zwischen dieser Aussenschicht (4) und der absorbierenden Fläche (2, 2a) lichtdurchlässiges, wärmedämmendes Material angeordnet ist, dadurch gekennzeichnet, daß das lichtdurchlässige, wärmedämmende Material aus Acrylglas oder Silgel in Schaum-, Kapillarröhrchenform oder in amorpher Form besteht.

2. Wand nach Anspruch 1, dadurch gekennzeichnet, daß die Schicht auf der Außenseite durch eine transparente Außenschicht (4), insbesondere Folie oder Scheibe lichtdurchlässigen Materials, wie Silikat- oder Acrylglas, insbesondere Preßglas, abgedeckt ist.

3. Wand nach Anspruch 1 oder 2, dadurch gekennzeichnet, daß die Absorptionsfläche (2, 2a) auf der Außenseite der Wand (1) und/oder der Innenseite der Materialschicht (3) befestigt ist.

4. Wand nach einem der Ansprüche 1 bis 3, dadurch gekennzeichnet, daß zwischen Materialschicht (3) und Wand (1), insbesondere zwischen Materialschicht und absorptionsfläche (2, 2a) und/oder zwischen Absorptionsfläche und Wand ein Zwischenraum (7) besteht, der von einem Fluid, insbesondere Luft durchströmt ist.

5. Wand nach einam der Ansprüche 1 bis 4, dadurch gekennzeichnet, daß zur Vergrößerung der Oberfläche die Absorptionsfläche bzw. -schicht (2a) mindestens auf einer Seite Vorsprünge, insbesondere Rippen (8) aufweist, die in den Zwischenraum (7) und/oder die Materialschicht (3) hineinragen.

6. Wand nach einem der Ansprüche 1 bis 5, dadurch gekennzeichnet, daß die Absorptionsfläche (bzw. Schicht) (2) innen Kanäle für das Fluid aufweist.

7. Wand nach einem der Ansprüche 2 bis 6, dadurch gekennzeichnet, daß die Außenschicht (4) von einer lichtdurchlässigen Scheibe gebildet ist, die auf der Außenseite durch Fugen (5), Nuten, Streifen, stellenweisen und/oder streifenförmigen Material- und/oder Farbauftrag architektonisch gestaltet ist.

8. Wand nach einem der Ansprüche 2 bis 7, dadurch gekennzeichnet, daß die Außenschicht (4) platten-, ziegel- und/oder riemenförmige Scheiben (4a) lichtdurchlässigen Materials aufweist.

9. Wand nach Anspruch 8, dadurch gekennzeichnet, daß die Scheiben (4a) durch Fugen (5) voneinander getrennt sind, die durch ein abweichendes Material (5) gefüllt sind.

10. Wand nach einem der Ansprüche 2 bis 9, dadurch gekennzeichnet, daß die Außenschicht auf der Innenseite Vorsprünge, insbesondere Zapfen (6) trägt, die die Materialschicht (3) durchdringen und sich auf der Absorptionsfläche bzw. -schicht (2) und/oder der Wandaußenseite abstützen.

11. Wand nach einem der Ansprüche 8 bis 10, dadurch gekennzeichnet, daß jede platten- oder riemenförmige Scheibe (4a) der Außenschicht mindestens zwei Vorsprünge, insbesondere Zapfen (6) trägt.

12. Wand nach einem der Ansprüche 1 bis 11, dadurch gekennzeichnet, daß die Materialschicht (3) mindestens einen Zwischenraum, insbesondere Kanäle (10) und/oder miteinander verbundene Zwischenräume, wie Großporen, aufweist.

13. Wand nach Anspruch 12, dadurch gekennzeichnet, daß der Zwischenraum (7, 10) oder die Zwischenräume vom Fluid, insbesondere Luft, durchströmt sind.

14. Wand nach einem der Ansprüche 1 bis 13, dadurch gekennzeichnet, daß die Materialschicht (3) aus amorphem Siliziumoxid besteht.

15. Wand nach einem der Ansprüche 1 bis 14, dadurch gekennzeichnet, daß die Kapillarröhrchen rechtwinklig zur Wand angeordnet sind.

16. Wand nach einem der Ansprüche 1 bis 15, dadurch gekennzeichnet daß sie einen vor der Befestigung transportierbaren Sonnenkollektor bildet.

17. Wand nach einem der Ansprüche 1 bis 16, dadurch gekennzeichnet, daß durch beschattende Vorrichtungen, insbesondere Jalousien und/oder durch eine reflektierende Bedampfung auf der Wandaußenseite ein Eindringen der Sonnenstrahlung begrenzbar ist.

18. Wand nach einem der Ansprüche 1 bis 17, dadurch gekennzeichnet, daß die die Sonnenstrahlung absorbierende Schicht oder Fläche eine selektive Schicht ist oder trägt.

**Claims**

1. Wall having an external layer (4) which is secured approximately parallel thereto on the front external face, which is permeable to solar rays and behind which there is arranged at a distance a surface (2, 2a) absorbing solar radiation, there being arranged in the cavity between this external layer (4) and the absorbing surfaces (2, 2a) translucent, heat-insulating material, characterised in that the translucent, heat-insulating material consists of acrylic glass or silgel in the form of foam or capillary tubes or in amorphous form.

2. Wall according to claim 1, characterised in that the layer is covered on the external face by a transparent external layer (4), especially a film or plate of translucent material, such as silica or acrylic glass, especially pressed glass.

3. Wall according to claim 1 or 2, characterised in that the absorption surface (2, 2a) is secured to the external face of the wall (1) and/or to the internal face of the material layer (3).

4. Wall according to one of claims 1 to 3, characterised in that between the material layer (3) and the wall (1), especially between the material layer and the absorption surface (2, 2a) and/or between the absorption surface and the wall, there is an intermediate space through which a fluid, especially air, flows.

5. Wall according to one of claims 1 to 4, characterised in that, to increase the surface area, the absorption surface or layer (2a) has, at least on one side, projections, especially ribs (8), which project into the intermediate space (7) and/or the material layer (3).

6. Wall according to one of claims 1 to 5, characterised in that the absorption surface (or layer) (2) has, internally, channels for the fluid.

7. Wall according to one of claims 2 to 6, characterised in that the external layer (4) is formed from a translucent plate which, on the external face, is shaped architectonically by seams (5), grooves, strips, or spotwise and/or strip-shaped application of material and/or colour.

8. Wall according to one of claims 2 to 7, characterised in that the external layer (4) has plate-, brick- and/or strip-shaped plates (4a) of translucent material.

9. Wall according to claim 8, characterised in that the plates (4a) are separated from one another by seams (5) which are filled by a different material (5).

10. Wall according to one of claims 2 to 9, characterised in that the external layer has on its internal face projections, especially pegs (6), which penetrate the material layer (3) and are supported on the absorption surface or layer (2) and/or on the external face of the wall.

11. Wall according to one of claims 8 to 10, characterised in that each plate or strip-shaped plate (4a) of the external layer has at least two projections, especially pegs (6).

12. Wall according to one of claims 1 to 11, characterised in that the material layer (3) has at least one intermediate space, especially channels (10) and/or intermediate spaces connected to one another, such as large pores.

13. Wall according to claim 12, characterised in that fluid, especially air, flows through the intermediate space (7, 10) or the intermediate spaces.

14. Wall according to one of claims 1 to 13, characterised in that the material layer (3) consists of amorphous silica.

15. Wall according to one of claims 1 to 14, characterised in that the capillary tubes are arranged at right-angles to the wall.

16. Wall according to one of claims 1 to 15, characterised in that, before securing, it forms a transportable solar collector.

17. Wall according to one of claims 1 to 16, characterised in that the penetration of solar radiation can be limited by shading devices, especially blinds, and/or by a reflecting vapour-deposition on the external face of the wall.

18. Wall according to one of claims 1 to 17, characterised in that the layer or surface absorbing solar radiation is or supports a selective layer.

**Revendications**

1.- Paroi avec une couche externe (4) perméable aux rayons solaires fixée en avant sensiblement parallelement sur la face extérieure, derrière laquelle est disposée à distance une surface (2, 2a) absorbant le rayonnement solaire, un matériau translucide et thermo-isolant étant disposé dans l'espace entre cette couche externe (4) et cette surface absorbante (2, 2a), caractérisée par le fait que le matériau translucide et thermo-isolant est constitué par du verre acrylique ou du silicagel sous forme de mousse, de tubes capillaires ou sous forme amorphe.

2.- Paroi selon la revendication 1, caractérisée par le fait que la couche sur la face extérieure est recouverte par une couche externe (4) transparente, en particulier une feuille ou une plaque de matériau translucide, comme du verre au silicate ou du verre acrylique, en particulier du verre pressé.

3.- Paroi selon l'une des revendications 1 ou 2, caractérisée par le fait que la surface d'absorption (2, 2a) est fixée sur la face extérieure de la paroi (1) et/ou sur la face intérieure de la couche de matière (3).

4.- Paroi selon l'une des revendications 1 à 3, caractérisée par le fait qu'un espace intermédiaire (7) qui est traversé par un fluide, en particulier de l'air, existe entre la couche de matière et la surface d'absorption (2, 2a) et/ou entre la surface d'absorption et la paroi.

5.- Paroi selon l'une des revendications 1 à 4, caractérisée par le fait que, pour agrandir la superficie, la surface ou couche d'absorption (2a) présente sur au moins une face des saillies, en particulier des nervures (8), qui font saillie dans l'espace intermédiaire (7) et/ou la couche de matière (3).

6.- Paroi selon l'une des revendications 1 à 5, caractérisée par le fait que la surface (ou couche) d'absorption (2) présente à l'intérieur des canaux pour le fluide.

7.- Paroi selon l'une des revendications 1 à 6, caractérisée par le fait que la couche externe (4) est constituée par une plaque translucide qui est formée architechtoniquement sur la face extérieure par des points (5), des rainures, des bandes, un matériau et/ou un enduit de couleur disposé localement et/ou en bandes.

8.- Paroi selon l'une des revendications 2 à 7, caractérisée par le fait que la couche externe (4) présente des plaques (4a) en matériau translucide en forme de plaques, de briques et/ou de frises.

9.- Paroi selon la revendication 8, caractérisée par le fait que les plaques (4a) sont séparées les unes des autres par des joints (5) qui sont remplis par un matériau différent (5).

10.- Paroi selon l'une des revendications 2 à 9, caractérisée par le fait que la couche externe porte sur la face intérieure des saillies, en particulier des tenons (6), qui traversent la couche de matière (3) et s'appuient sur la surface ou couche d'absorption (2) et/ou sur la face extérieure de la paroi.

11.- Paroi selon l'une des revendications 8 à 10, caractérisée par le fait que chaque plaque (4a) en forme de plaque ou de frise de la couche externe porte au moins deux saillies, en particulier des tenons (6).

12.- Paroi selon l'une des revendications 1 à 11, caractérisée par le fait que la couche de matière (3) présente au moins un espace intermédiaire, en particulier des canaux (10) et/ou des espaces intermédiaires reliés les uns aux autres comme des macropores.

13.- Paroi selon la revendication 12, caractérisée par le fait que l'espace intermédiaire (7, 10) ou les espaces intermédiaires sont traversés par un fluide, en particulier de l'air.

14. - Paroi selon l'une des revendications 1 à 13, caractérisée par le fait que la couche de matière (3) est constituée d'oxyde de silicium amorphe.

15.- Paroi selon l'une des revendications 1 à 14, caractérisée par le fait que les tubes capillaires sont disposés orthogonalement à la paroi.

16.- Paroi selon l'une des revendications 1 à 15, caractérisée par le fait qu'elle constitue un collecteur solaire transportable avant fixation.

17.- Paroi selon l'une des revendications 1 à 16, caractérisée par le fait qu'une pénétration du rayonnement solaire peut être limitée par des dispositifs donnant de l'ombre, en particulier des jalousies et/ou par une métallisation réfléchissante sur la face extérieure de la paroi.

18.- Paroi selon l'une des revendications 1 à 17, caractérisée par le fait que la couche ou surface absorbant le rayonnement solaire est ou porte une couche sélective.

Fig. 1

Fig. 2

Fig. 3

Fig. 4

Fig. 5

Fig. 6

Fig. 7